# FASCICULE DE BREVET EUROPEEN

(11) **EP 2 090 622 B1**
(45) Date de publication et mention de la délivrance du brevet: **10.06.2015**
(21) Numéro de dépôt: 09305130.8
(22) Date de dépôt: 12.02.2009
(51) Int. Cl.: C09D 5/02, C09D 5/00, C09D 191/00, C09D 107/02, C08L 93/04, C08L 91/00, C09D 193/04, B01F 3/08, C08J 3/03, C04B 26/22, C08K 3/00, C08K 5/103, C09J 191/00, C09J 193/04, C08L 7/02, C04B 111/00

(54) **Emulsion aqueuse comportant un liant ayant au moins un composé issu de ressources renouvelables, peinture ou enduit comportant une telle émulsion**
Wässrige Emulsion, die ein Bindemittel enthält, das mindestens aus einem aus erneuerbaren Ressourcen stammenden Bestandteil besteht, Lacke oder Spachtelmasse, die eine solche Emulsion enthalten
Aqueous emulsion comprising a binder with at least one compound coming from renewable resources, paint or coating comprising such an emulsion

(30) Priorité: 13.02.2008 FR 0850916
(43) Date de publication de la demande: 19.08.2009
(73) Titulaire: COLAS, 92100 Boulogne-Billancourt (FR)
(72) Inventeur: BRICOUT Xavier, 78960 VOISINS LE BRETONNEUX (FR); DENEUVILLERS Christine, 78310 MAUREPAS (FR); LECONTE Daniel, 76100 ROUEN (FR)
(74) Mandataire: Michelet, Alain

(56) Documents cités:
- EP-A- 1 466 878
- WO-A-2005/077996
- US-A1- 2003 145 516
- US-B1- 6 589 442
- ANONYME: "FICHE DE DONNÉES DE SÉCURITÉ: Stabiram 3070", CECA: ARKEMA GROUP, [Online] 30 septembre 2003 (2003-09-30), pages 1-4, XP002495534, Extrait de l'Internet: URL:http://cmt.ecritel.net/cmt_bin/wfds-af fform?NFou=CECA%C2%A7FR_PI&Lang=EN> [extrait le 2008-09-11]

## Description

La présente invention concerne une peinture ou un enduit comprenant une émulsion aqueuse comportant un liant ayant au moins un composé issu de ressources renouvelables. Elle a des applications dans le domaine du génie civil et notamment pour la réalisation de marquages routiers ou comme revêtement de sols pour protection de bétons ou d'enrobés bitumineux.

Les produits, notamment du type peinture et enduit aqueux, sont généralement réalisés à base d'émulsions à partir de matières premières issues de la pétrochimie. S'ils ont l'avantage de mettre en oeuvre de l'eau, ces produits issus de la pétrochimie ont toutefois l'inconvénient de provenir de ressources non renouvelables.

Dans le contexte présent de réduction des émissions carbonées issues de sources non renouvelables, on comprend qu'il est souhaitable de développer des produits de ce type mais qui mettent en oeuvre des liants à base de composants issus de ressources renouvelables, en pratique végétales et notamment agricoles dont forestières, aquatiques (plantes aquatiques), en substitution des liant pétrochimiques habituels pour ces applications de peintures, enduits, encres, vernis, adhésifs et colles. De tels produits présentent alors des avantages chiffrés liés aux critères du développement durable.

On connaît ainsi par le brevet US 6 369 119 B1 déposé par Rasio Chemicals UK Ltd en 2002, une émulsion de résine de colophane. Par le brevet US 5 288 782 on connaît une mise en oeuvre d'une émulsion de résine de colophane en tant qu'agent d'encollage ou d'apprêtage pour l'industrie du papier et destiné à augmenter la résistance du substrat cellulosique au mouillage en milieu aqueux. On connaît également par la demande de brevet FR 2 867 192 au nom de la société ALBAC, une peinture à base de standolie d'huiles végétales ou animales et d'émulsifiants naturels. Toutefois, dans ce dernier document, la résine naturelle est en très faible quantité (0,5% à 10%), à titre d'additif, et pour augmenter la dureté, la souplesse ou la brillance de l'émulsion selon l'utilisation souhaitée.

On connaît également par la demande FR-2853647 un liant d'origine végétale.

Le document WO 2005/077996 décrit une dispersion d'agents poisseux comprenant : une résine, un émulsifiant et de l'eau.

Le document US 2003/0145516 décrit une composition d'additif utile pour préparer une composition de combustion synthétique

Le document US 6,589,442 décrit une composition anti-poussière sous forme d'émulsion comprenant un mélange de tall-oil brut et d'huile végétale.

A la base, le produit proposé par la présente invention est une peinture ou un enduit comprenant une émulsion aqueuse, tel(le) que décrit dans le jeu de revendications, ladite émulsion aqueuse comportant un liant ayant au moins un composé issu de ressources renouvelables.

Selon l'invention, l'émulsion comporte :
d'une part une phase liant résultant du mélange d'au moins une résine de colophane et d'au moins une huile végétale ou un dérivé d'huile végétale, dans la phase liant, la résine de colophane représentant 81% à 95 %, et l'huile végétale ou dérivé d'huile végétale représentant le complément à 100% de la phase liant, et d'autre part une phase aqueuse comportant au moins un tensioactif et de l'eau, dans l'émulsion la phase liant représentant de 20% à 80%, le tensioactif de 0,01% à 20% et l'eau le complément à 100%, les pourcentages étant en poids.

Le premier constituant essentiel de la phase liant est la résine de colophane. Par résine de colophane on entend la colophane naturelle, mais également les colophanes modifiées, notamment par estérification. Parmi les colophanes estérifiées, on peut citer les colophanes estérifiées avec du glycérol ou du pentaérythritol.

De préférence, la phase liant comprend une colophane estérifiée avec du glycérol ou du pentaérythritol, ou encore un mélange de ces deux colophanes estérifiées.

Le second constituant essentiel de la phase liant est l'huile végétale ou le dérivé d'huile végétale.

L'huile végétale qui peut être naturelle ou modifiée, est, par exemple une huile oxydée ou encore une standolie (huile cuite près de son point d'ébullition et polymérisée).
L'huile végétale et le dérivé d'huile végétale sont choisis parmi les huiles végétales brutes ou raffinées et leurs dérivés, ces derniers étant choisis parmi les esters, acides gras, oxydes ou standolies.

Le dérivé d'huile végétale est une huile végétale polymérisée.

Parmi les huiles végétales (naturelles ou à titre d'huiles de base pour les huiles modifiées) on peut citer les huiles de soja, de lin, de tournesol, de colza, de pépins de raisin, d'arachide, d'olive, de canola, de carthame, de coprah, de germe de blé, de maïs, de noix, d'amande, de palme, de sésame, de bois de Chine ou « tung », de ricin, de coton et leurs mélanges.

L'huile végétale peut encore être un dérivé d'huile végétale ou mélange de dérivés d'huile végétale tels que les acides gras, les alcools gras, les esters d'acides gras, les esters d'acides gras modifiés chimiquement,

Les esters d'acides gras sont obtenus par trans-estérification d'huiles végétales avec un alcool. Les esters d'acides gras préférés sont des esters de triglycérides d'acides gras (glycérine estérifiée par des molécules d'acides gras) et comportant des insaturations. Les triglycérides peuvent être obtenus par trituration de graines et extraction d'huile, (leur hydrolyse conduit au glycérol et à des acides gras).

Les acides gras peuvent être des acides gras saturé(s) ou insaturé(s), monocarboxyliques comprenant 6 à 24 atomes de carbone, dicarboxyliques comprenant 12 à 48 atomes de carbone et/ou tricarboxylique(s) comprenant 18 à 72 atomes de carbone.

De préférence, les acides gras sont isolés ou dérivés d'une huile végétale choisie parmi les huiles végétales naturelles et les huiles végétales modifiées, et par exemple parmi l'huile de soja, l'huile de lin, l'huile de tournesol, l'huile de colza, l'huile de pépins de raisin, l'huile d'arachide, l'huile d'olive, l'huile de canola, l'huile de carthame, l'huile de coprah, l'huile de germe de blé, l'huile de maïs, l'huile de noix, l'huile d'amande, l'huile de palme, l'huile de sésame et leurs mélanges.

A titre d'exemple, les acides gras saturés linéaires peuvent être choisis parmi l'acide caproïque, l'acide caprylique, l'acide caprique, l'acide laurique, l'acide myristique, l'acide palmitique, l'acide margarique, l'acide stéarique, l'acide arachidique, l'acide béhénique, et l'acide lignocérique.

A titre d'exemple les acides gras insaturés monocarboxyliques peuvent être choisis parmi l'acide palmitoléique, l'acide oléique, l'acide vaccénique, l'acide linoléique, l'acide linolénique, l'acide arachidonique, l'acide eicosapentaénoïque, l'acide érucique, l'acide docosahexaénolique, l'acide nervonique, et l'acide nonanonique.

Les acides gras définis ci-dessus sont des acides gras monocarboxyliques convenant à la réalisation d'un liant de base conforme à l'invention.

Des acides gras convenant également à la réalisation d'un liant de base conforme à l'invention sont des acides gras polymérisés, qui comprennent plus d'une fonction carboxylique, et se présent par exemple sous forme d'acides gras sous forme de dimères ou de trimères.

A titre d'exemple d'acides gras dicarboxyliques sous forme de dimères, convenant aussi à la réalisation d'un liant de base conforme à l'invention on peut citer les acides gras comprenant 12 à 48 atomes de carbones saturés ou insaturés, de préférence insaturés et en particulier l'acide gras insaturés comprenant 18 atomes de carbones dont la référence CAS est 61788-89-4.

Enfin, à titre d'exemple d'acides gras tricarboxyliques, sous forme de trimères convenant à la réalisation d'un liant de base conforme à l'invention on peut citer les acides gras comprenant 18 à 72 atomes de carbones saturés ou insaturés, de préférence insaturés et en particulier l'acide gras insaturé comprenant 18 atomes de carbones dont la référence CAS est 68937-90-6.

La phase aqueuse comprend essentiellement de l'eau et un ou plusieurs tensioactifs.

Les tensioactifs peuvent être cationiques, zwitterioniques, ou anioniques ou non ioniques.

Parmi les tensioactifs on peut citer les alkylpolyglucosides (APG), les alkylsulfates, les condensats d'acides gras peptides ou d'acides aminés, les sels d'amines, les sucroesters, les alcools gras, les esters de glycérol ou poly(glycérol), les esters ou amides de glycines bétaïnes, les résines de colophane modifiées (maléinisées ou acidifiées ou estérifiées), la lécithine de soja, les méthyléthersulfonates, les phospholipides, les phosphatidylcholines, les esters ou amides de glycine bétaïne. Parmi les tensioactifs préférés on peut citer la colophane polymérisée (polygral®), l'inuline hydrophobique (Innutec SP1t®) ou le lauryl glucoside (glucopon®). Les tensioactifs peuvent être éventuellement des composés saponifiés.

Lorsque le liant comprend des colophanes ayant une activité de tensioactif, le tensioactif peut être en partie ou en totalité fourni par le liant.

Dans une réalisation recommandée, l'émulsion comporte :
i) une phase liant représentant 40% à 75% en poids par rapport au poids de l'émulsion et comprenant :
   - 81 à 95 % et, mieux, de 84% à 95% en poids par rapport au poids de la phase liant d'au moins une résine de colophane estérifiée, de préférence par du glycérol ou du pentaérythritol et
   - le complément à 100% de la phase liant d'au moins une huile végétale choisie de préférence parmi l'huile de lin ou de soja,
ii) une phase aqueuse comportant 0,5% à 3%, de préférence 1 à 2,5% en poids d'au moins un tensioactif choisi de préférence parmi une colophane polymérisée de préférence saponifiées ou un tensioactif d'inuline hydrophobique de préférence saponifiée et le complément à 100% en poids d'eau par rapport au poids de l'émulsion.

Dans une réalisation recommandée, l'émulsion comporte, d'une part, un liant comportant une résine de colophane estérifiée au pentaérythritol à raison de 85% à 95% en poids du liant, une huile de soja à raison de 5% à 15% en poids du liant, le liant représentant 45% à 75%, de préférence 50% à 70% en poids de l'émulsion et, d'autre part, comme tensioactif une colophane polymérisée de préférence saponifiées à raison de 1% à 3%, de préférence 1,5% à 2,5% en poids de l'émulsion et de l'eau pour complément à 100% en poids.

A titre d'exemple particulier d'une émulsion telle que définie ci-dessus on peut citer l'émulsion comprenant :
- 60% en poids d'un liant constitué de 90% en poids d'une colophane estérifiée par le pentaérythritol et 10% d'huile de soja,
- 2% en poids de colophane polymérisée (tensioactif),
- 1 % en poids de solution aqueuse de soude (agent de saponification du tensioactif), et
- complément d'eau à 100%.

Selon une autre réalisation, l'émulsion comporte, d'une part, un liant comportant une résine de colophane estérifiée à la glycérine à raison de 81 à 90% en poids du liant, le complément à 100% de la phase liant d'une huile de lin, le liant représentant 40% à 60%, de préférence 45% à 55% en poids de l'émulsion et, d'autre part, un tensioactif d'inuline hydrophobique de préférence saponifiée à raison de 0,5% à 2,5%, de préférence 1 % à 2% en poids de l'émulsion, et de l'eau pour complément à 100% en poids de l'émulsion.

A titre d'exemple d'une émulsion telle que définie ci-dessus on peut citer une émulsion comprenant :
- 50% en poids d'un liant constitué de 85% en poids de colophane estérifiée à la glycérine et 15% en poids d'huile de lin ;
- 1,6% en poids d'inuline hydrophobique (tensioactif) ;
- 0,4% en poids de solution aqueuse de soude à 30% (agent de saponification du tensioactif) ; et
- le complément d'eau.

L'émulsion selon l'invention est principalement destinée à être mise en oeuvre dans une peinture ou un enduit mais peut également être mise en oeuvre dans une encre, un adhésif ou une colle.

L'invention concerne donc ainsi une peinture (y compris les vernis) ou un enduit à base d'émulsion aqueuse comportant un liant ayant au moins un composé issu de ressources renouvelables, telle que définie précédemment.

Les enduits destinés au marquage se distinguent des enduits superficiels. Selon l'invention, un enduit destiné au marquage est composé principalement du mélange d'un liant, éventuellement sous forme d'émulsion, et de charges, en général minérales de diamètre moyen inférieur ou égal à 1 mm.

Par comparaison, les enduits superficiels sont des couches de surfaces obtenues par répandage quasi-simultané, mais séparé, d'un liant et de gravillons. Les gravillons sont des granulats de dimension d/D avec d ≥ 1 (d : dimension la plus petite) et D ≤ 31,5 (D : dimension la plus grande).

La peinture ou l'enduit peut notamment comprendre en poids par rapport aux poids total de la peinture ou de l'enduit :
- de 20% à 50%, de préférence de 25 à 35% d'une émulsion aqueuse comportant :
   i) une phase liant représentant 20% à 80% en poids par rapport au poids de l'émulsion et comprenant :
      - 81% à 95%, et mieux encore de 95% à 84% en poids par rapport au poids de la phase liant d'au moins une résine de colophane et
      - le complément à 100% de la phase liant d'au moins une huile végétale ou un dérivé d'huile végétale,
   ii) une phase aqueuse comportant 0,01% à 20% en poids d'au moins un tensioactif et le complément à 100% en poids d'eau par rapport au poids de l'émulsion,
- de 20% à 80% de charges et éventuel(s) pigment(s).

De préférence, la phase liant comprend 81 à 95% en poids de résine de colophane et 19% 6 % d'huile végétale.

La peinture ou l'enduit peut notamment comporter en poids 20% à 50%, de préférence de 20 à 45 % et mieux de 25% à 35% de ladite émulsion, éventuellement jusqu'à 20%, de préférence jusqu'à 10% d'un latex naturel, de 1% à 10% d'additifs et de 20% à 80%, de préférence 25% à 50% de charges et éventuel(s) pigment(s).

Parmi les latex naturels convenant pour les peintures et enduits de l'invention on peut citer les latex de caoutchoucs naturels.

Les additifs peuvent être tous additifs classiquement utilisés dans les peintures et enduits tels que dispersants (par exemple BR3® de la société COATEX), épaississants, surfactants (par exemple un éthoxylate d'alcool secondaire, non ionique : Tergitol® 15-S-40 de la société UNION CARBIDE) et antimousses (par exemple Drew 4202 de la société ASHLAND).

Parmi les charges convenant pour la présente invention on peut citer, les carbonates alcalino-terreux tels que le carbonate de calcium, la silice, la poudre et les billes de verre (creuses ou non), polymères à microvides, poudre et granulats de marbre, craie, talc, dolomie et « extenders » (silicates,sulfates, wollastonites, aluminosilicates, hydrates d'aluminium), etc. et leurs mélanges.

Parmi les pigments on peut citer les pigments minéraux comme les oxydes métalliques tels que l'oxyde de titane, les oxydes de fer, blancs de zinc, lithopone et les pigments organiques synthétiques ou naturels tels que les pigments azoïques et naphtols.

Toujours parmi les pigments, on peut citer les pigments d'origine végétale (voire animale) agricole, forestière ou aquatique comme de la garance des teinturiers (Rubia tinctorum L.), du réséda ou gaude (Reseda luteola L.), du genêt des teinturiers (Genista tinctoria L.), du solidage du Canada (Solidago canadensis L.), du cosmos jaune (Cosmos sulphureus Cav.), du coréopsis des teinturiers (Coreopsis tinctoria Nutt.), du sorgho des teinturiers (Sorghum bicolor (L.) Moench.), de l'indigo de pastel (Isatis tinctoria L.), du bois de campêche (Haematoxylon campechianum L.), du bois de brésil ou pernambouc (Caesalpinia echinata Lam.), du québracho (Schinopsis *lorentzii* Engl.), du gambier (Uncaria gambir Roxb.), du châtaignier (Castanea sativa L.), ou de l'indigo (Indigofera anil L.) ou, encore, le nerprun, de la chlorophylle, de la cochenille, du myrobalan, de la noix de galle, du génipa ou du bois de résineux.

Les charges et pigments de l'enduit ou de la peinture de l'invention ont de préférence un diamètre moyen inférieur à 1 mm.

Une peinture selon l'invention comprend de 20 à 45 %, de préférence de 20% à 35%, et mieux de 25% à 35% en poids d'une émulsion selon l'invention, de 0 à 20%, de préférence de 0 à 5% en poids d'un latex naturel, de 15% à 20% en poids de pigment, de 25 à 40% de charges, de 1% à 5% en poids d'additifs et le complément à 100% étant de l'eau.

A titre d'exemple on peut citer une peinture comportant 29,3% de ladite émulsion, 3% de latex naturel, 18% de pigment (oxyde de titane), 36% de charge (carbonate de calcium + billes de verre), 2,2% d'additifs et le complément à 100% d'eau, les pourcentages étant en poids, l'émulsion végétale étant à base de résine de colophane estérifiée au pentaérythritol, d'huile de soja raffinée, de colophane polymérisée saponifiée et d'eau, et les additifs sont des dispersant, épaississant et antimousse.

On peut encore citer à titre d'exemple :
- une peinture comportant 26,5% de ladite émulsion, 5% de latex naturel, 18% de pigment (oxyde de titane), 37% de charge (carbonate de calcium + billes de verre), 2,2% d'additifs et le complément à 100% d'eau, les pourcentages étant en poids, l'émulsion végétale étant à base de résine de colophane estérifiée au pentaérythritol, d'huile de soja raffinée, d'inuline hydrophobique saponifiée et d'eau et les additifs sont des dispersant, épaississant et antimousse,
- une peinture comportant 43% de ladite émulsion, 15% de pigment (oxyde de titane + ocre naturelle), 27% de charge (carbonate de calcium + billes de verre), 2,2% d'additifs et le complément à 100% d'eau, les pourcentages étant en poids et l'émulsion végétale étant à base de résine de colophane estérifiée au glycérol, d'huile de soja raffinée, d'inuline hydrophobique saponifiée et d'eau et les additifs sont des dispersant, épaississant et antimousse.

On doit noter que dans le cadre de la présente invention les termes peinture (dont les vernis) et enduit sont considérés équivalents, les constituants de base de ces deux types de produits étant essentiellement les mêmes et la différence essentielle concerne la viscosité du produit considéré qui peut être contrôlée en fonction des proportions relatives des constituants de base ou l'ajout d'un ou plusieurs éléments spécifiques pouvant augmenter la viscosité ainsi que la taille des particules et l'épaisseur finale du film de produit.
La présente invention, sans qu'elle en soit pour autant limitée, va maintenant être exemplifiée avec la description qui suit de modes de réalisation.

Comme indiqué précédemment, la présente invention est notamment mise en oeuvre pour la réalisation de marquages routiers ou comme revêtement de sols pour protection de bétons ou d'enrobés bitumineux. Les produits réalisés permettant ces mises en oeuvre respectent de préférence des normes en rapport avec la réalisation prévue et notamment la norme EN1436 qui définit les performances, pour les usagers de la route, des marquages routiers blancs et jaunes quant à leur réflexion à la lumière du jour (RL), à leur rétroréflexion sous l'éclairement des projecteurs de véhicules (QD), à leur couleur et à leur glissance (SRT) Les produits correspondants répondent aux exigences minimales suivantes en France sur route sèche:

| | Blanc | Jaune | Unités |
|---|---|---|---|
| RL | >= 150 | >= 200 | mCd/lx/m² |
| QD | >= 100 | >= 80 | mCd/lx/m² |
| SRT | >= 0,45 | >= 0,45 | |

Parmi les pigments utilisables dans des applications routières on peut mentionner non restrictivement, l'oxyde de fer jaune, l'oxyde de titane et le dioxyde de titane-rutile.

De préférence, on met en oeuvre une émulsion qui comporte une colophane estérifiée au glycérol et/ou au pentaérythritol dont les formules chimiques sont respectivement :

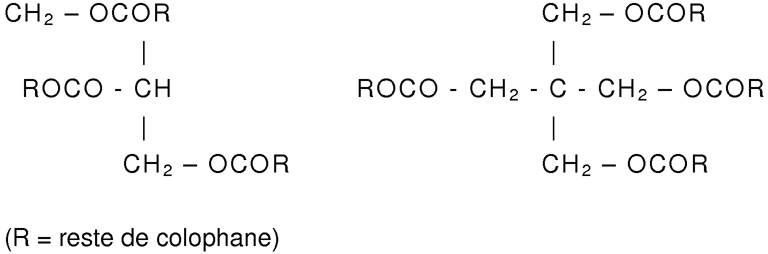

Deux émulsions ont été réalisées à base de résine de colophane respectivement estérifiée au pentaérythritol et au glycérol.

La première émulsion comporte pour le liant : une résine de colophane estérifiée au pentaérythritol (Dertoline® P2L) à raison de 90% en poids du liant, une huile de soja (fluxant) à raison de 10% en poids du liant, le liant représentant 60% en poids de l'émulsion. Le liant est préparé à chaud (140°C) dans un homogénéisateur tournant à 7700 tr/min. Cette première émulsion comporte également, dans la phase aqueuse, un savon réalisé avec un tensioactif de colophane polymérisée (polygral®) à raison de 2% en poids de l'émulsion et de la soude concentrée à 30% à raison de 1% en poids de l'émulsion. Enfin, cette première émulsion comporte de l'eau en complément à 100% en poids de l'émulsion, soit environ 40% d'eau.

La seconde émulsion comporte pour le liant : une résine de colophane estérifiée au glycérol (Dertoline® G2L) à raison de 85% en poids du liant, une huile de lin à raison de 15% en poids du liant, le liant représentant 50% en poids de l'émulsion. Le liant est préparé à chaud (140°C) dans un homogénéisateur tournant à 8000 tr/min. Cette seconde émulsion comporte également un savon réalisé avec de l'inuline hydrophobique (Innutec SP1t) à raison de 1,6% en poids de l'émulsion et de la soude concentrée à 30% à raison de 0,4% en poids de l'émulsion. Enfin, cette seconde émulsion comporte de l'eau en complément à 100% en poids de l'émulsion, soit environ 50% d'eau.
A noter qu'en alternative, un savon avec du lauryl glucoside (glucopon® 650EC) peut être réalisé.

Le tableau suivant donne les compositions et les principales propriétés physico-chimiques mesurées sur ces deux émulsions.

| | | Emulsion 1 (1 tonne) | Emulsion 2 (1 tonne) |
|---|---|---|---|
| Fabrication | | | |
| MOPCST EM-001-1 / EM-001-2 | | | |
| Phase liant de l'émulsion | kg/t | 600 | 500 |
| Formule du liant (%) | | | |
| Résine de colophane | | résine P2L 90% | résine G2L 85% |
| Fluxant | | huile de soja 10% | huile de lin 15% |
| Température | °C | 140 | 140 |
| Vitesse de l'homogénéisateur tr/min | | 7700 | 8000 |
| Phase aqueuse | | | |
| Formule | | Polygral 20Kg/t | Innutec SP1t 16Kg/t |
| | | NaOH(30%) 10Kg/t | NaOH(30%) 4Kg/t |
| Eau (complément à) | | 400Kg/t | 500Kg/t |
| Température | °C | 50 | 70 |
| Régime phase aqueuse | l/h | 50 | 60 |
| pH de la phase aqueuse | | >12 | >12 |
| Temps d'incorporation du liant | | 2min-2min30 | 2min-2min30 |
| Soutirage après x minutes après fin Incorporation | | 1 min | 1min |
| Extrait sec (balance infrarouge) | % | | |
| MOPCST PC-011 | | | |
| Teneur en eau | % | 39,3 | 50,8 |
| Granulométrie laser | à J+1 | | |
| MOPCST EM-005 | | | |
| Diamètre médian | µm | 0,56 | 0,78 |
| Ecart-Type (log10) | µm | 0,34 | 0,41 |
| pH | | 9,6 | 9,1 |
| NF EN 12850 | | | |
| Température | °C | 20 | 20 |
| Visco (Cp ac RV3-100RPM) | à J+1 | 273 mPa.s | (R2V100) 66 mPa.s |

Trois formulations de peinture ont été réalisées à partir des deux émulsions précédentes. Les formulations correspondantes sont données dans les trois tableaux suivants.

### Peinture 1

| | Nature du produit | Nom commercial | Fournisseur | Pourcentage en masse |
|---|---|---|---|---|
| Emulsion | résine de colophane estérifiée au pentaérythritol | Dertoline P2L | DRT | 15 |
| | huile végétale | Huile de soja raffinée | Carqill | 3 |
| | Tensioactif de colophane polymérisée | Polygral | DRT | 0,6 |
| | Agent de saponification | Hydroxyde de sodium (dilué 30%) | Carlo Erba | 0,3 |
| | Eau | - | - | 10,4 |
| Latex | Latex Naturel | Latex naturel | Lambert Rivière | 3 |
| Pigment | Oxyde de titane | Titanpol R-001 | ZschPolice | 18 |
| Charges | Carbonate de calcium | Durcal 5 | Omya | 28 |
| | Billes de verre | Aq 0/45 | Potters | 8 |
| Additifs peinture | Antimousse | Drewplus Tg 4202 | Ashland | 0,5 |
| | Dispersant | Coatex BR3 | Coatex | 1,5 |
| | Epaississant | Byk 420 | Byk Chemie | 0,2 |
| Eau | | - | - | 11,5 |
| | | | TOTAL | 100 |

### Peinture 2

| | Nature du produit | Nom commercial | Fournisseur | Pourcentage en masse |
|---|---|---|---|---|
| Emulsion | résine de colophane estérifiée au pentaérythritol | Dertoline P2L | DRT | 12,5 |
| | huile végétale | Huile de soja raffinée | Carqill | 1,5 |
| | Tensioactif d'inuline hydrophobique | Innutec Sp1tl | Orafti | 1 |
| | Agent de saponification | Hydroxyde de sodium (dilué 30%) | Carlo Erba | 0,5 |
| | Eau | - | - | 11 |
| Latex | Latex Naturel | Latex naturel | Lambert Rivière | 5 |
| Pigment | Oxyde de titane | Titanpol R-001 | ZschPolice | 18 |
| Charges | Silice | Millicil C300 | Omya | 28 |
| | Billes de verre | Aq 0/45 | Potters | 9 |
| Additifs peinture | Antimousse | Drewplus Tg 4202 | Ashland | 0,5 |
| | Dispersant | Coatex 123 | Coatex | 1,5 |
| | Epaississant | Byk 420 | Byk Chemie | 0,2 |
| Eau | | - | - | 11,3 |
| | | | TOTAL | 100 |

### Peinture 3

| | Nature du produit | Nom commercial | Fournisseur | Pourcentage en masse |
|---|---|---|---|---|
| Emulsion | résine de colophane estérifiée au glycérol | Dertoline G2L | DRT | 22,5 |
| | huile végétale | Huile de soja raffinée | Cargill | 4,5 |
| | Tensioactif d'inuline hydrophobique | Innutec Sp1t | Orafti | 0,9 |
| | Agent de saponification | Hydroxyde de sodium (dilué 30%) | Carlo Erba | 0,45 |
| | Eau | - | - | 15,45 |
| Pigment | Oxyde de titane | Titanpol R-001 | ZschPolice | 9 |
| | Ocre naturelle | Ocre havane | Maison de l'écologie | 6 |
| Charges | Carbonate de calcium | Durcal 5 | Omya | 22 |
| | Billes de verre | Aq 0/45 | Potters | 5 |
| Additifs peinture | Antimousse | Drewplus Tg 4202 | Ashland | 0,5 |
| | Dispersant | Coatex BR3 | Coatex | 1,5 |
| | Epaississant | Byk 420 | Byk Chemie | 0,2 |
| Eau | | - | - | 12 |
| | | | TOTAL | 100 |

On comprend que les valeurs et proportions données aussi bien pour l'émulsion que pour les peintures sont indicatives et qu'elles peuvent varier pour ces mêmes formulations ou pour la réalisation d'autres formulations entrant dans le cadre de l'invention.

### Caractéristiques des peintures

| | Méthode | Peinture N°1 | Peinture N°2 | Peinture N°3 |
|---|---|---|---|---|
| Extrait sec | NF EN ISO 3251 | 76% | 77% | 75% |
| Teneur en cendres | NF T 30-012 | 60% | 43% | 59% |
| Viscosité Brookfield (RV4/ 10 RPM) | ISO 2555 | 5880 mPa.s | 3040 mPa.s | 5540 mPa.S |
| Viscosité Brookfield (PVA/ 100 RPM) | ISO 2555 | 1250 mPa.s | 858 mPa.s | 1120 mPa.s |
| Temps de séchage au BK | NF L 16-116 | 35 min | 42 min | 37 min |
| Dureté Persoz (J+1) | NF EN ISO 1522 | 17 sec | 37 sec | 22 sec |
| MFFT | ISO 2115 | 1,5°C | 4°C | 2°C |

A partir de ces formulations de peintures, on obtient un film dur en quelques minutes à température ambiante avec un très bon effet filmogène. L'application par pulvérisation en couche mince peut permettre d'abaisser le temps de séchage à moins de 10 minutes. Enfin, ces peintures ont d'excellentes caractéristiques mécaniques.

## Revendications

1. Peinture ou enduit comprenant en poids par rapport aux poids total de la peinture ou de l'enduit :
- de 20% à 50% d'une émulsion aqueuse comportant :
i) une phase liant représentant 20% à 80% en poids par rapport au poids de l'émulsion et comprenant :
- 81% à 95% en poids par rapport au poids de la phase liant d'au moins une résine de colophane et
- le complément à 100% de la phase liant d'au moins une huile végétale ou un dérivé d'huile végétale,
ii) une phase aqueuse comportant 0,01% à 20% en poids d'au moins un tensioactif et le complément à 100% en poids d'eau par rapport au poids de l'émulsion,
- de 20% à 80% de charges et éventuel(s) pigment(s).

2. Peinture ou enduit selon la revendication 1, **caractérisée en ce que** la résine de colophane est choisie parmi un ou plusieurs des produits suivants: la colophane naturelle, un dérivé de la colophane notamment par estérification et dans ce dernier cas, le dérivé de la colophane estérifié l'est de préférence par le glycérol ou le pentaérythritol.

3. Peinture ou enduit selon la revendication 1 ou 2, **caractérisée en ce que** l'huile végétale et le dérivé d'huile végétale sont choisis parmi les huiles végétales brutes ou raffinées et leurs dérivés, ces derniers étant choisis parmi les acides gras, les alcools gras, les esters d'acides gras, les esters d'acides gras modifiés chimiquement, les oxydes ou les standolies.

4. Peinture ou enduit selon la revendication 1, 2 ou 3, **caractérisée en ce que** l'huile provient d'un ou plusieurs des produits suivants : les huiles de soja, de lin, de tournesol, de colza, de pépins de raisin, d'arachide, d'olive, de canola, de carthame, de coprah, de germe de blé, de maïs, de noix, d'amande, de palme, de sésame, de bois de Chine ou « tung », de ricin, de coton.

5. Peinture ou enduit selon l'une quelconque des revendications 1 à 4, **caractérisée en ce que** le tensioactif est un tensioactif cationique, anionique, zwitterionique ou non ionique.

6. Peinture ou enduit selon la revendication 5, **caractérisée en ce que** le/les tensioactifs sont choisis parmi les alkylpolyglucosides (APG), les alkylsulfates, les condensats d'acides gras peptides ou d'acides aminés, les sels d'amines, les sucroesters, les alcools gras, les esters de (poly)glycérol, les esters ou amides de glycines bétaïnes, les résines de colophane modifiées, la lécithine de soja, les méthyléthersulfonates, les phospholipides, les phosphatidylcholines, les esters ou amides de glycine bétaïne.

7. Peinture ou enduit selon la revendication 6, **caractérisée en ce que** le tensioactif ou au moins un des tensioactifs est un dérivé de colophane et **en ce que** lorsque la phase liant comporte ce même dérivé de colophane, ledit tensioactif est apporté au moins en partie par la phase liant.

8. Peinture ou enduit selon l'une quelconque des revendications précédentes, **caractérisée en ce que** ladite émulsion aqueuse comporte, d'une part, un liant comportant une résine de colophane estérifiée au pentaérythritol à raison de 85 à 95%, en poids du liant, une huile de soja à raison de 5 à 15% en poids du liant, le liant représentant 45 à 75% en poids de l'émulsion et, d'autre part, un tensioactif de colophane polymérisée saponifiée à raison de 1 à 3 en poids de l'émulsion et de l'eau pour complément à 100% en poids de l'émulsion.

9. Peinture ou enduit selon l'une quelconque des revendications 1 à 7, **caractérisée en ce que** ladite émulsion aqueuse comporte, d'une part, un liant comportant une résine de colophane estérifiée au glycérol à raison de 81 à 90% en poids du liant, le complément à 100% de la phase liant d'une huile de lin, le liant représentant 40 à 60%en poids de l'émulsion et, d'autre part, un tensioactif d'inuline hydrophobique saponifié à raison de 0,5 à 2,5% en poids de l'émulsion et de l'eau pour complément à 100% en poids de l'émulsion.

10. Peinture ou enduit selon l'une quelconque des revendications précédentes, **caractérisé en ce qu'**il comporte jusqu'à 20% d'un latex naturel et de 1% à 10% d'additifs.

11. Peinture selon l'une quelconque des revendications précédentes **caractérisée en ce qu'**elle comprend, en poids, de 20 à 35% de ladite émulsion, 0 à 20% d'un latex naturel, de 15 à 20% en poids d'un pigment, de 1 à 5% en poids d'additifs et le complément à 100% étant de l'eau.

12. Peinture selon la revendication 11, **caractérisée en ce qu'**elle comporte 29,3% de ladite émulsion, 3 de latex naturel, 18% d'oxyde de titane, 36% de charge carbonate de calcium + billes de verre, 2,2% d'additifs et le complément à 100% d'eau, les pourcentages étant en poids et l'émulsion végétale étant à base de résine de colophane estérifiée au pentaérythritol, d'huile de soja raffinée, de colophane polymérisée saponifiée et d'eau et les additifs sont des dispersant, épaississant et antimousse.

13. Peinture selon la revendication 11, **caractérisée en ce qu'**elle comporte 26,5% de ladite émulsion, 5% de latex naturel, 18% d'oxyde de titane, 37% de charge carbonate de calcium + billes de verre, 2,2% d'additifs et le complément à 100% d'eau, les pourcentages étant en poids et l'émulsion végétale étant à base de résine de colophane estérifiée au pentaérythritol, d'huile de soja raffinée, d'inuline hydrophobique saponifiée et d'eau et les additifs sont des dispersant, épaississant et antimousse.

14. Peinture selon la revendication 11, **caractérisée en ce qu'**elle comporte 43% de ladite émulsion, 15% d'oxyde de titane + ocre naturelle, 27% de charge carbonate de calcium + billes de verre, 2,2% d'additifs et le complément à 100% d'eau, les pourcentages étant en poids et l'émulsion végétale étant à base de résine de colophane estérifiée au glycérol, d'huile de soja raffinée, d'inuline hydrophobique saponifiée et d'eau et les additifs sont des dispersant, épaississant et antimousse.

## Patentansprüche

1. Lack oder Überzug, umfassend als Gewicht, bezogen auf das Gesamtgewicht des Lacks oder Überzugs:
- 20 bis 50% einer wässrigen Emulsion, umfassend:
i) eine Bindephase, die 20 bis 80 Gew.-%, bezogen auf das Gewicht der Emulsion, ausmacht und Folgendes umfasst:
- 81 bis 95 Gew.-%, bezogen auf das Gewicht der Bindephase, wenigstens eines Kolophoniums; und
- als Rest auf 100% der Bindephase wenigstens ein Pflanzenöl oder Pflanzenölderivat;
ii) eine wässrige Phase, die 0,01 bis 20 Gew.-% wenigstens eines Tensids und als Rest auf 100 Gew.-% Wasser umfasst, bezogen auf das Gewicht der Emulsion;
- 20 bis 80% Füllstoffe und gegebenenfalls ein oder mehrere Pigmente.

2. Lack oder Überzug gemäß Anspruch 1, **dadurch gekennzeichnet, dass** das Kolophonium aus einem oder mehreren der folgenden Produkte ausgewählt ist: natürliches Kolophonium, ein Derivat von Kolophonium, insbesondere durch Veresterung, wobei das Derivat von Kolophonium dann vorzugsweise mit Glycerin oder Pentaerythrit verestert ist.

3. Lack oder Überzug gemäß Anspruch 1 oder 2, **dadurch gekennzeichnet, dass** das Pflanzenöl und das Pflanzenölderivat aus rohen oder raffinierten Pflanzenölen und ihren Derivaten ausgewählt sind, wobei letztere aus Fettsäuren, Fettalkoholen, Fettsäureestern, chemisch modifizierten Fettsäureestern, Oxiden oder Standölen ausgewählt sind.

4. Lack oder Überzug gemäß Anspruch 1, 2 oder 3, **dadurch gekennzeichnet, dass** das Öl aus einem oder mehreren der folgenden Produkte stammt: Sojaöl, Leinöl, Sonnenblumenöl, Rapsöl, Traubenkernöl, Erdnussöl, Olivenöl, Canolaöl, Färberdistelöl, Kokosnussöl, Weizenkeimöl, Maisöl, Nussöl, Mandelöl, Palmöl, Sesamöl, Tungöl, Ricinusöl, Baumwollöl.

5. Lack oder Überzug gemäß einem der Ansprüche 1 bis 4, **dadurch gekennzeichnet, dass** das Tensid ein kationisches, anionisches, zwitterionisches oder nichtionisches Tensid ist.

6. Lack oder Überzug gemäß Anspruch 5, **dadurch gekennzeichnet, dass** das oder die Tenside aus Alkylpolyglucosiden (APG), Alkylsulfaten, Kondensaten von Fettsäuren mit Peptiden oder Aminosäuren, Aminsalzen, Zuckerestern, Fettalkoholen, Polyglycerinestern, Estern oder Amiden von Glycinbetainen, modifiziertem Kolophonium, Sojalecithin, Methylethersulfonaten, Phospholipiden, Phosphatidylcholinen, Estern oder Amiden von Glycinbetain ausgewählt sind.

7. Lack oder Überzug gemäß Anspruch 6, **dadurch gekennzeichnet, dass** das Tensid oder wenigstens eines der Tenside ein Kolophoniumderivat ist und dass dieses Tensid, wenn die Bindephase genau dieses Kolophoniumderivat umfasst, wenigstens zum Teil aus der Bindephase eingetragen wird.

8. Lack oder Überzug gemäß einem der vorstehenden Ansprüche, **dadurch gekennzeichnet, dass** die wässrige Emulsion einerseits ein Bindemittel, das ein mit Pentaerythrit verestertes Kolophonium in einem Anteil von 85 bis 95 Gew.-% des Bindemittels und ein Sojaöl in einem Anteil von 5 bis 15 Gew.-% des Bindemittels umfasst, wobei das Bindemittel 45 bis 75 Gew.-% der Emulsion ausmacht, und andererseits ein Tensid aus verseiftem polymerisierten Kolophonium in einem Anteil von 1 bis 3 Gew.-% der Emulsion sowie Wasser als Rest auf 100 Gew.-% der Emulsion umfasst.

9. Lack oder Überzug gemäß einem der Ansprüche 1 bis 7, **dadurch gekennzeichnet, dass** die wässrige Emulsion einerseits ein Bindemittel, das ein mit Glycerin verestertes Kolophonium in einem Anteil von 81 bis 90 Gew.-% des Bindemittels und als Rest auf 100 Gew.-% der Bindephase ein Leinöl umfasst, wobei das Bindemittel 40 bis 60 Gew.-% der Emulsion ausmacht, und andererseits ein Tensid aus verseiftem hydrophoben Inulin in einem Anteil von 0,5 bis 2,5 Gew.-% der Emulsion sowie Wasser als Rest auf 100 Gew.-% der Emulsion umfasst.

10. Lack oder Überzug gemäß einem der vorstehenden Ansprüche, **dadurch gekennzeichnet, dass** er bis zu 20% eines Naturlatex und 1 bis 10% Additive umfasst.

11. Lack gemäß einem der vorstehenden Ansprüche, **dadurch gekennzeichnet, dass** er 20 bis 35 Gew.-% der Emulsion, 0 bis 20 Gew.-% eines Naturlatex, 15 bis 20 Gew.-% eines Pigments und 1 bis 5 Gew.-% Additive umfasst, wobei der Rest auf 100% aus Wasser besteht.

12. Lack gemäß Anspruch 11, **dadurch gekennzeichnet, dass** er 29,3% der Emulsion, 3% Naturlatex, 18% Titanoxid, 36% Calciumcarbonat + Glaskügelchen als Füllstoff, 2,2% Additive sowie Wasser als Rest auf 100% umfasst, wobei die Prozentangaben gewichtsbezogen sind und die pflanzliche Emulsion auf mit Pentaerythrit verestertem Kolophonium, raffiniertem Sojaöl, verseiftem polymerisierten Kolophonium und Wasser beruht und es sich bei den Additiven um Dispergiermittel, Verdickungsmittel und Schaumverhütungsmittel handelt.

13. Lack gemäß Anspruch 11, **dadurch gekennzeichnet, dass** er 26,5% der Emulsion, 5% Naturlatex, 18% Titanoxid, 37% Calciumcarbonat + Glaskügelchen als Füllstoff, 2,2% Additive sowie Wasser als Rest auf 100% umfasst, wobei die Prozentangaben gewichtsbezogen sind und die pflanzliche Emulsion auf mit Pentaerythrit verestertem Kolophonium, raffiniertem Sojaöl, verseiftem hydrophoben Inulin und Wasser beruht und es sich bei den Additiven um Dispergiermittel, Verdickungsmittel und Schaumverhütungsmittel handelt.

14. Lack gemäß Anspruch 11, **dadurch gekennzeichnet, dass** er 43% der Emulsion, 15% Titanoxid + natürlicher Ocker, 27% Calciumcarbonat + Glaskügelchen als Füllstoff, 2,2% Additive sowie Wasser als Rest auf 100% umfasst, wobei die Prozentangaben gewichtsbezogen sind und die pflanzliche Emulsion auf mit Glycerin verestertem Kolophonium, raffiniertem Sojaöl, verseiftem hydrophoben Inulin und Wasser beruht und es sich bei den Additiven um Dispergiermittel, Verdickungsmittel und Schaumverhütungsmittel handelt.

## Claims

1. Paint or coating comprising by weight relative to the total weight of the paint or coating:
- from 20% to 50% of an aqueous emulsion comprising:
i) a binder phase representing 20% to 80% by weight relative to the weight of the emulsion and comprising:
- 81% to 95% by weight relative to the weight of the binder phase of at least a rosin resin and
- the balance to 100% of the binder phase of at least a vegetable oil or a vegetable oil derivative,
ii) an aqueous phase comprising 0.01% to 20% by weight of at least a surfactant and the balance to 100% by weight of water relative to the weight of the emulsion,
- from 20% to 80% of fillers and optional pigment(s).

2. Paint or coating according to claim 1, **characterized in that** the rosin resin is selected from one or more of the following products: natural rosin, rosin derivative especially by esterification, and in this latter case, the esterified rosin derivative is preferably esterified by glycerol or pentaerythritol.

3. Paint or coating according to claim 1 or 2, **characterized in that** the vegetable oil and the vegetable oil derivative are selected from crude or refined vegetable oils and their derivatives, the latter being selected from fatty acids, fatty alcohols, fatty acid esters, chemically modified fatty acid esters, oxides or standoils.

4. Paint or coating according to claim 1, 2 or 3, **characterized in that** the oil is from one or more of the following products: the soybean, linseed, sunflower, rapeseed, grape seed, peanut, olive, canola, safflower, coconut, wheat germ, corn, nut, almond, palm, sesame, chinawood or tung, castor, cottonseed oils.

5. Paint or coating according to any ane of claims 1 to 4, **characterized in that** the surfactant is a cationic, anionic, zwitterionic or nonionic surfactant.

6. Paint or coating according to claim 5, **characterized in that** the surfactant(s) are selected from alkylpolyglucosides (APG), alkyl sulfates, peptide fatty acid or amino acid condensates, amine salts, sucrose esters, fatty alcohols, (poly)glycerol esters, glycine betaine esters or amides, modified rosin resins, soya lecithin, methyl ether sulfonates, phospholipids, phosphatidylcholines, glycine betaine esters or amides.

7. Paint or coating according to claim 6, **characterized in that** the surfactant or at least one of the surfactants is a rosin derivative and **in that** when the binder phase comprises the same rosin derivative, said surfactant is provided, at least in part, by the binder phase.

8. Paint or coating according to any one of the preceding claims, **characterized in that** said aqueous emulsion comprises, on one hand, a binder comprising a pentaerythritol-esterifted rosin resin in an amount of 85 to 95%, by weight of the binder, a soybean oil in an amount of 5 to 15% by weight of the binder, the binder representing 45 to 75% by weight of the emulsion and, on the other hand, a saponified polymerized rosin surfactant in an amount of 1 to 3 by weight of the emulsion and water for the balance to 100% by weight of the emulsion.

9. Paint or coating according to any one of claims 1 to 7, **characterized in that** said aqueous emulsion comprises, on one hand, a binder comprising a glycerol-esterified rosin resin in an amount of 81 to 90% by weight of the binder, the balance to 100% of the binder phase of a linseed oil, the binder representing 40 to 60% by weight of the emulsion and, on the other hand, a saponified hydrophobic inulin surfactant in an amount of 0.5 to 2.5% by weight of the emulsion and water for the balance to 100% by weight of the emulsion.

10. Paint or coating according to any one of the preceding claims, **characterized in that** it comprises up to 20% of natural latex and from 1% to 10% of additives.

11. Paint according to any one of the preceding claims, **characterized in that** it comprises, by weight, from 20 to 35% of said emulsion, 0 to 20% of natural latex, from 15 to 20% by weight of a pigment, from 1 to 5% by weight of additives and the balance to 100% being water.

12. Paint according to claim 11, **characterized in that** it comprises 29.3% of said emulsion, 3% of natural latex, 18% of titanium oxide, 36% of filler calcium carbonate + glass beads, 2.2% of additives and the balance to 100% of water, the percentages being by weight and the vegetable emulsion being based on pentaerythritol-esterified rosin resin, refined soybean oil, saponified polymerized rosin and water and the additives are dispersant, thickening and antifoam.

13. Paint according to claim 11, **characterized in that** it comprises 26.5% of said emulsion, 5% of natural latex, 18% of titanium oxide, 37% of filler calcium carbonate + glass beads, 2.2% of additives and the balance to 100% of water, the percentages being by weight and the vegetable emulsion being based on pentaerythritol-esterified rosin resin, refined soybean oil, saponified hydrophobic inulin and water and the additives are dispersant, thickening and antifoam.

14. Paint according to claim 11, **characterized in that** it comprises 43% of said emulsion, 15% of titanium oxide + natural ochre, 27% of filler calcium carbonate + glass beads, 2.2% of additives and the balance to 100% of water, the percentages being by weight and the vegetable emulsion being based on glycerol-esterified rosin resin, refined soybean oil, saponified polymerized inulin and water and the additives are dispersant, thickening and antifoam.
